# EUROPEAN PATENT SPECIFICATION

(11) **EP 2 975 632 B1**
(45) Date of publication and mention of the grant of the patent: **03.03.2021**
(21) Application number: 15176869.4
(22) Date of filing: 15.07.2015
(51) Int. Cl.: H01J 49/04

(54) **SAMPLE PLATE FOR MALDI-TOF MASS SPECTROMETER AND METHOD OF MANUFACTURING THE SAMPLE PLATE AND MASS SPECTROMETRY METHOD USING THE SAMPLE PLATE**
PROBENPLATTE FÜR MALDI-TOF-MASSENSPEKTROMETER UND VERFAHREN ZUR HERSTELLUNG DER PROBENPLATTE UND MASSENSPEKTROMETRIEVERFAHREN MIT DER PROBENPLATTE
PLAQUE D'ÉCHANTILLON POUR SPECTROMÈTRE DE MASSE MALDI-TOF, PROCÉDÉ DE FABRICATION DE LA PLAQUE D'ÉCHANTILLONS ET PROCÉDÉ DE SPECTROMÉTRIE DE MASSE UTILISANT LADITE PLAQUE

(30) Priority: 16.07.2014 KR 20140089660
(43) Date of publication of application: 20.01.2016
(73) Proprietor: Industry-Academic Cooperation Foundation Yonsei University, Seoul 120-749 (KR)
(72) Inventor: PYUN, Jaechul, Seodaemun-gu, 120-749 (KR); KIM, Jo Il, Seoul (KR)
(74) Representative: Patent- und Rechtsanwälte Ullrich & Naumann

(56) References cited:
- WO-A2-2005/104179
- DE-A1-102010 020 933
- JO-IL KIM ET AL: "Matrix-assisted laser desorption/ionization time-of-flight mass spectrometry of small volatile molecules using a parylene-matrix chip", RAPID COMMUNICATIONS IN MASS SPECTROMETRY., vol. 28, no. 21, 25 September 2014 (2014-09-25), pages 2301-2306, XP055227413, GB ISSN: 0951-4198, DOI: 10.1002/rcm.7025
- JO-IL KIM ET AL: "Parylene-matrix chip for small molecule analysis using matrix-assisted laser desorption/ionization time-of-flight mass spectrometry", RAPID COMMUNICATIONS IN MASS SPECTROMETRY, vol. 28, no. 3, 16 December 2013 (2013-12-16), pages 274-280, XP055198824, ISSN: 0951-4198, DOI: 10.1002/rcm.6782
- CHENYI SHI ET AL: "Facile synthesis of magnetic graphene and carbon nanotube composites as a novel matrix and adsorbent for enrichment and detection of small molecules by MALDI-TOF MS", JOURNAL OF MATERIALS CHEMISTRY, vol. 22, no. 38, 20 August 2012 (2012-08-20), page 20778, XP055228057, GB ISSN: 0959-9428, DOI: 10.1039/c2jm34745h
- YOUNG-KWAN KIM ET AL: "Synergistic Effect of Graphene Oxide/MWCNT Films in Laser Desorption/Ionization Mass Spectrometry of Small Molecules and Tissue Imaging", ACS NANO, vol. 5, no. 6, 28 June 2011 (2011-06-28), pages 4550-4561, XP055227393, US ISSN: 1936-0851, DOI: 10.1021/nn200245v

## Description

### CROSS REFERENCE TO RELATED APPLICATION

The present application claims priority from Korea Patent Application Number 2014-89660 filed on July 16, 2014.

### TECHNICAL FIELD

The present invention relates to a sample plate to be used for a MALDI-TOF (Matrix Assisted Laser Desorption Ionization Time of Flight) mass spectrometer, and more particularly, to a sample plate for a MALDI-TOF mass spectrometer, which is particularly useful for molecular weight measurement of a high-volatile material, a method of manufacturing the sample plate and a mass spectrometry method using the sample plate.

### BACKGROUND ART

In general, a mass spectrometer is an analysis device configured to measure mass of a compound. The mass spectrometer is configured to electrically charge and ionize the compound, to measure mass and an electrical charge amount and to determine a molecular weight of the compound. As the method of ionizing the compound, an electron ionization method of using an electron beam, a method of colliding atoms at high speed, a method of using laser, and the like have been known.

The method of using laser is a method of mixing a matrix for assisting the ionization of the compound with a compound (sample) to be analyzed, arranging the mixture on a target of the analysis device, and illuminating the laser to the sample to ionize the sample with the aid of the matrix. The method has merits in that it is possible to measure a molecular weight of a high molecular material, to analyze a sample of a femtomole due to the high sensitivity and to remarkably reduce a phenomenon that the compound to be analyzed is split upon the ionization. Therefore, the MALDI-TOF mass spectrometry method using the laser is efficient in the mass spectrometry of the high molecular biochemical material such as protein and hexane. The MALDI-TOF mass spectrometer for the method is recently commercialized.

However, the typical matrix material has a molecular weight of hundreds of Da. When a molecular weight of the compound to be analyzed is similar to a molecular weight of the matrix material, a decomposed matter of the matrix appears on a mass spectrum. Therefore, the above method has a demerit in that it is difficult to use the same for the mass spectrometry of the compound having the molecular weight of hundreds of Da or less.

Also, for the MALDI-TOF mass spectrometry, a sample, which is an analysis target, is dropped on a sample plate, the sample plate is arranged at a predetermined position of the MALDI-TOF mass spectrometer and the laser is illuminated to ionize the sample. However, the high-volatile sample volatilizes and disappears from the sample plate before the laser is illuminated. Therefore, it is necessary to increase a concentration of the high-volatile sample. Also, it may not possible to perform the mass spectrometry, depending on the samples.

In the meantime, for the mass spectrometry of the high-volatile material of the chemical materials, a gas chromatography method is mainly used. The method is a method of using a principle that when a sample is arranged with a gas (carrier gas) such as helium and hydrogen being enabled to flow while keeping a flow rate thereof constant, the sample is heated and evaporated and the respective components are separated due to a difference of moving speeds while the sample passes through a long metallic pipe having active alumina or silica gel filled therein. However, the gas chromatography method has demerits in that the steps for analyzing each sample are more complicated, the cost for one analysis is increased and the correctness is lowered, as compared to the MALDI-TOF mass spectrometry.

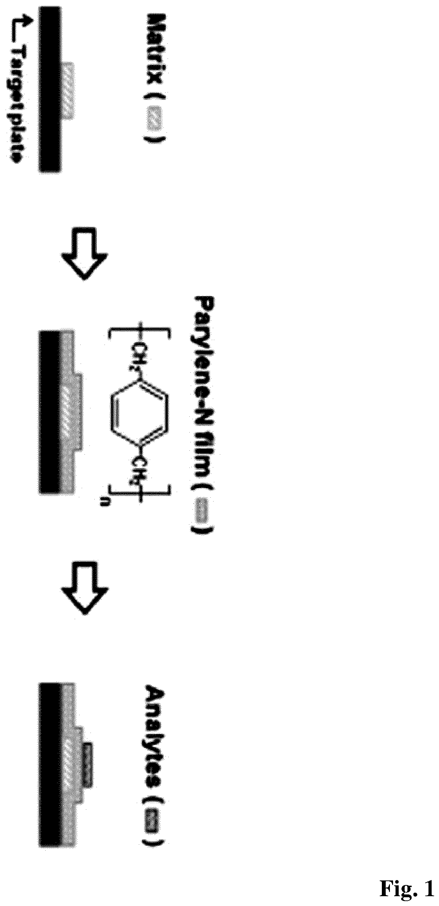

JO-IL KIM ET AL: "Parylene-matrix chip for small molecule analysis using matrix-assisted laser desorption/ionization time-of-flight mass spectrometry", RAPID COMMUNICATIONS IN MASS SPECTROMETRY, vol. 28, no. 3, 16 December 2013 (2013-12-16), pages 274-280, XP055198824, ISSN: 0951-4198, DOI: 10.1002/rcm.6782 shows a sample plate for mass spectrometry. According to Fig. 1a, the sample plate includes a target plate and an organic matrix formed on one surface of the target plate and a parylene thin film formed on the target plate having the organic matrix formed thereon and formed to cover the entire organic matrix, the parylene thin film having a thickness of 50 nm.

### SUMMARY OF THE INVENTION

It is therefore an object of the present invention to provide a method capable of performing a mass spectrometry for a high-volatile material by using a MALDI-TOF mass spectrometer so as to overcome the limits of the gas chromatography method of the related art.

Another object of the present invention is to provide a sample plate for a MALDI-TOF mass spectrometer capable of performing a mass spectrometry for a high-volatile material.

According to an aspect of the present invention, there is provided a sample plate according to claim 1 and a sample plate according to claim 2.

In an illustrative embodiment of this aspect, the sample fixing layer may be formed on the parylene thin film without being mixed with a sample, which is an analysis target.

In an illustrative embodiment of this aspect, the sample plate may further include an analysis target formed on the parylene thin film.

In an illustrative embodiment of this aspect, the parylene thin film is preferably parylene-N thin film.

In an illustrative embodiment of this aspect, the sample plate is a sample plate for a MALDI-TOF (Matrix Assisted Laser Desorption Ionization Time of Flight) mass spectrometer.

According to another aspect of the present invention, there is provided a method of manufacturing a sample plate according to claim 6 and a method of manufacturing a sample plate according to claim 7.

In an illustrative embodiment of this aspect, the method may further include a step of forming the sample on the sample fixing layer.

In an illustrative embodiment of this aspect, the parylene thin film is preferably parylene-N thin film.

In an illustrative embodiment of this aspect, the step of forming the parylene thin film may include a first step of evaporating parylene dimer, a second step of thermally decomposing the evaporated parylene dimer to form an intermediate product, and a third step of introducing the intermediate product into a vapor deposition chamber and forming the parylene thin film on the target plate having the organic matrix formed thereon.

In an illustrative embodiment of this aspect, the sample plate is preferably a sample plate for a MALDI-TOF mass spectrometer.

According to another aspect of the present invention, there are provided mass spectrometry methods using a MALDI-TOF (Matrix Assisted Laser Desorption Ionization Time of Flight) mass spectrometer according to claims 12 and 13.

When the sample plate of the present invention is used, even though the analysis target is a high-volatile material, the graphene formed on the sample plate and positioned below the sample or directly mixed with the sample prevents the analysis target from being evaporated into the air. Therefore, it is possible to perform the mass spectrometry even for the high-volatile material by using the MALDI-TOF mass spectrometer.

Also, according to the sample plate of the present invention, the parylene thin film is formed on the organic matrix. Therefore, even when the laser is illuminated, the organic matrix is ionized but does not reach a detector, so that it does not disturb the correct mass spectrometry. Therefore, the sample plate is particularly suitable for the mass spectrometry of the high-volatile material.

### BRIEF DESCRIPTOIN OF THE DRAWINGS

Fig. 1 is a schematic view illustrating a process of forming a sample plate according to a preferred illustrative embodiment of the present invention.
Fig. 2 is a block diagram showing an example of a parylene thin film forming apparatus not part of the claimed invention.
Fig. 3 illustrates an example of a structure of a MALDI-TOF mass spectrometer, which is used in an illustrative embodiment.
Fig. 4 illustrates cases where dimethyl methyl phosphonate (DMMP) is formed on the parylene thin film, where DMMP is formed on the organic matrix, the parylene thin film and the fixing layer of the graphene on the target plate, and where a mixture of DMMP and graphene is formed on the parylene thin film.
Fig. 5 shows results of molecular weight measurement after making sample plates by a variety of methods.
Fig. 6 shows results of molecular weight measurement of compounds having diverse molecular weights by using the sample plate of the preferred illustrative embodiment.
Fig. 7 shows results of mass spectrometry at each concentration when mixtures of DMMP of various concentrations and graphene or CNT are formed on the parylene thin film on the sample plate having the organic matrix and parylene thin film formed thereon.

### DETAILED DESCRIPTION OF ILLUSTRATIVE EMBODIMENTS

Hereinafter, a sample plate for a MALDI-TOF mass spectrometer, a method of manufacturing the same, and a mass spectrometry method using the same plate in accordance with a preferred illustrative embodiment of the present invention will be described in detail with reference to the accompanying drawings.

Fig. 1 is a schematic view illustrating a process of forming a sample plate according to a preferred illustrative embodiment of the present invention.

According to a first illustrative embodiment, a target plate for a MALDI-TOF mass spectrometer is prepared. The target plate is made of metal, for example, stainless steel. However, the present invention is not limited thereto.

Next, an organic matrix solution is dropped on the target plate and a solvent is dried to form an organic matrix. In a test according to a preferred illustrative embodiment of the present invention, in order to form α-Cyano-4-hydroxycinnamic acid (CHCA) organic matrix, as the organic matrix solution, a solution in which α-Cyano-4-hydroxycinnamic acid (CHCA) was dissolved at a concentration of 10 mg/ml in acetonitrile/water (1:1, v/v) having 0.1% trifluoroacetic acid added thereto was used. However, the organic matrix solution may be diversely selected depending on a type of a compound to be analyzed, and the present invention is not limited to the solution.

Next, a parylene thin film is deposited on the target plate having the organic matrix formed thereon. In general, parylene is a polymer in which p-xylene is polymerized, and is clear and has waterproof, flameproof and corrosion resistance properties, so that it can be applied to a variety of fields. Also, parylene to be deposited on a substrate generally means p-xylene dimer and is commonly referred to as parylene-N.

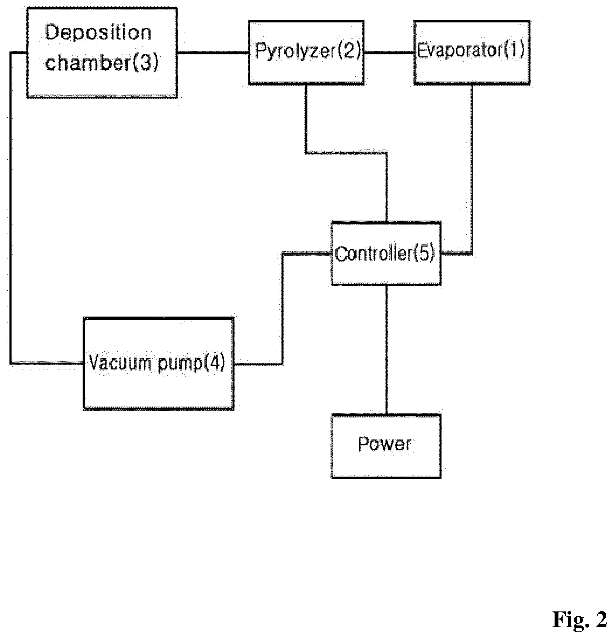

Fig. 2 is a block diagram showing an example of a parylene thin film forming apparatus not part of the claimed invention. As shown in Fig. 2, the parylene thin film forming apparatus of the related art includes an evaporation unit 1 configured to heat parylene dimer powder and to evaporate parylene, a thermal decomposition unit 2 configured to thermally decompose the evaporated parylene dimer gas at high temperatures and to form a high-reactive p-xylen radical, which is an intermediate product, a vapor deposition chamber 3 configured to introduce therein the high-reactive p-xylene radical and to deposit the high-reactive p-xylene radical on a substrate under vacuum state, a vacuum pump 4 configured to suck parylene monomer gas from the vapor deposition chamber 3 and to enable a trapping through a cold trap, and a control unit 5 configured to control various functions and operations of the apparatus. Although not shown in Fig. 2, the apparatus further includes connection pipes configured to connect the evaporation unit 1, the thermal decomposition unit 2, the vapor deposition chamber 3 and the vacuum pump 4, and a variety of valves configured to adjust the evaporation unit 1, the thermal decomposition unit 2, the vapor deposition chamber 3 and the vacuum pump 4.

According to a preferred illustrative embodiment of the present invention, a parylene thin film forming method includes a first step of evaporating parylene dimer, a second step of thermally decomposing the evaporated parylene dimer to form an intermediate product, and a third step of introducing the intermediate product into a vapor deposition chamber and forming a parylene thin film on a substrate arranged in the vapor deposition chamber.

Specifically, the parylene dimer to be evaporated in the first step is preferably parylene dimer powder for effective evaporation. In this case, the parylene dimer powder is preferably evaporated at temperatures of 100°C or higher, preferably 140°C to 180°C so that the parylene dimer powder is directly evaporated without being liquefied.

Also, in the second step, the parylene dimer gas is thermally decomposed at temperatures of 600°C or higher, preferably 650°C or higher. By the thermal decomposition, the intermediate product is generated. When parylene-N is thermally decomposed, the high-reactive p-xylene radical is generated as the intermediate product.

Also, in the third step, the thermally decomposed intermediate product is introduced into the vapor deposition chamber, is deposited to form the parylene thin film on the substrate arranged in the vapor deposition chamber. The formation of the parylene thin film is preferably performed at vacuum and room temperature conditions.

In the meantime, according to a preferred illustrative embodiment of the present invention, the substrate arranged in the vapor deposition chamber is a target plate having an organic matrix formed thereon.

The deposition of the parylene thin film has a merit in that a uniform deposition can be made irrespective of substrate shapes because the deposition is performed in the gas phase. Also, parylene is made into a thin film having a thickness of 10 nm to 100 nm because the thin film growth is slow, and the parylene thin film has a uniform and tight surface and excellent waterproof and electrical insulation properties.

In the meantime, it should be noted that one skilled in the art can form the parylene thin film by a variety of methods, in addition to the above method, and the present invention is not limited to the method of the illustrative embodiment.

Next, graphene is mixed with a sample, which is an analysis target. That is, the sample in Fig. 1 is a mixture of the sample and graphene. According to a preferred illustrative embodiment of the present invention, the sample, which is an analysis target, is mixed with graphene 500 ng/spot at various concentrations.

Then, the sample mixed with graphene is dropped on the parylene thin film on the sample plate, which is then dried and crystallized. Thereby, the sample plate is subject to a state suitable for mass spectrometry. According to a preferred illustrative embodiment of the present invention, the sample mixed with graphene is put into each spot in an amount of 1 µl/spot.

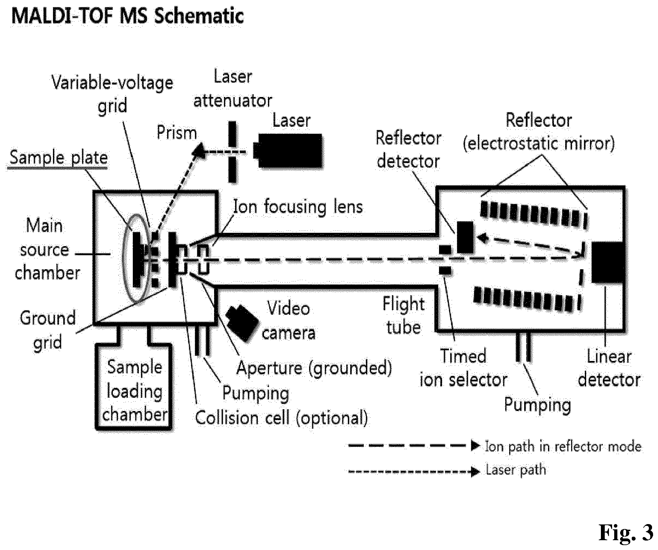

A method of performing the mass spectrometry for a predetermined sample by using the sample plate according to a preferred illustrative embodiment. Fig. 3 illustrates an example of a structure of a MALDI-TOF mass spectrometer, which is used in the illustrative embodiment. First, the sample plate is arranged at a designated position (a position denoted with 'Sample plate') in a mass spectrometer main chamber shown in Fig. 3 and then the laser is illuminated from a laser generation apparatus. The laser illuminated to a surface of the sample plate ionizes a part of a compound, which is an analysis target, and the ionized sample is accelerated by an electric field and passes through a flight tube. The ionized sample having passed through the flight tube collides with a detector, and the mass spectrometer calculates time consumed until the ionized sample collides with the detector from the surface of the sample plate, thereby perceiving the mass of the compound configuring the sample.

In the meantime, according to another illustrative embodiment of the present invention, graphene is sequentially applied to the sample plate, instead of being mixed with the sample. That is, after sequentially forming the organic matrix and the parylene thin film on the sample plate, a thin film layer of graphene is formed as a sample fixing layer. At this time, a thickness of the thin film layer may be several nanometers to dozens of nanometers, and is not particularly limited. Then, a high-volatile sample is dropped on the sample fixing layer, and the sample is dried and crystallized. Since a process of forming the organic matrix and the parylene thin film and a process of applying the sample plate to the MALDI-TOF mass spectrometer to perform the mass spectrometry according to the another illustrative embodiment is substantially the same as the preferred illustrative embodiment of the present invention, the descriptions thereof are omitted.

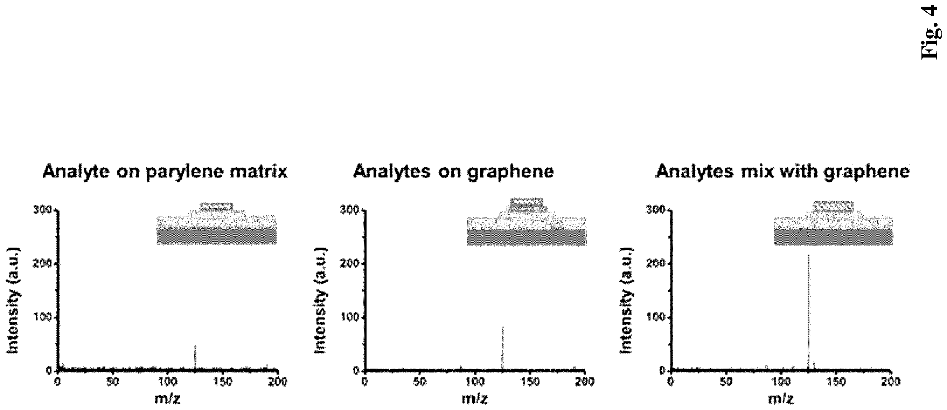

Fig. 4 illustrates a case not part of the claimed invention where after forming the organic matrix and the parylene thin film on the target plate, dimethyl methyl phosphonate (DMMP), which is a sample, is formed on the parylene thin film without forming the sample fixing layer of graphene, a case where after forming the organic matrix, the parylene thin film and the fixing layer of graphene on the target plate, DMMP is formed on the fixing layer, and a case where after forming the organic matrix and the parylene thin film on the target plate, a mixture of DMMP and graphene is formed on the parylene thin film. DMMP used in Fig. 4 is a material referred to as sarin gas, and high-concentration DMMP having a molecular weight of 124.08 Da, which was not diluted, was used.

As shown in Fig. 4, when using DMMP without mixing with graphene, DMMP was little detected even by the MALDI-TOF mass spectrometer. However, when the graphene fixing layer is formed below DMMP, it is possible to detect DMMP at a considerable level. That is, when DMMP and graphene are mixed, DMMP can be detected well.

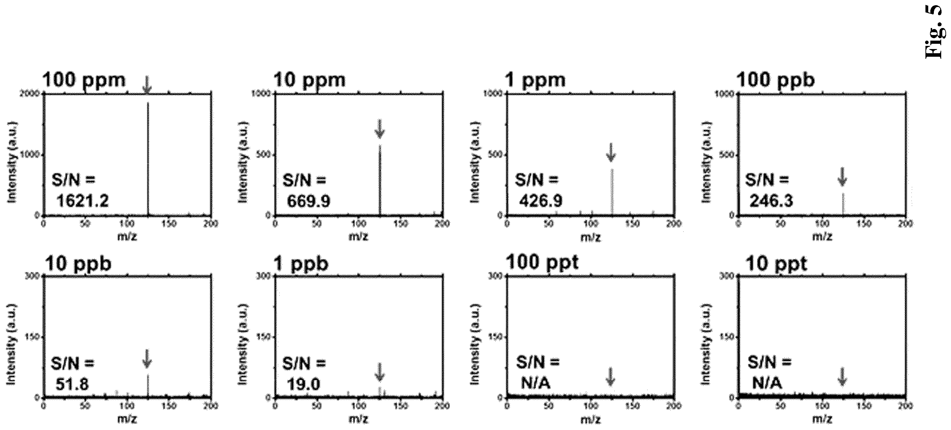

Fig. 5 shows results of mass spectrometry at each concentration when mixtures of DMMP of various concentrations and graphene are formed on the parylene thin film on the sample plate having the organic matrix and parylene thin film formed thereon. As shown in Fig. 5, even when the concentration of the sample is low such as 1 to 10 ppb, it can be seen that there are peaks at molecular weight positions of DMMP.

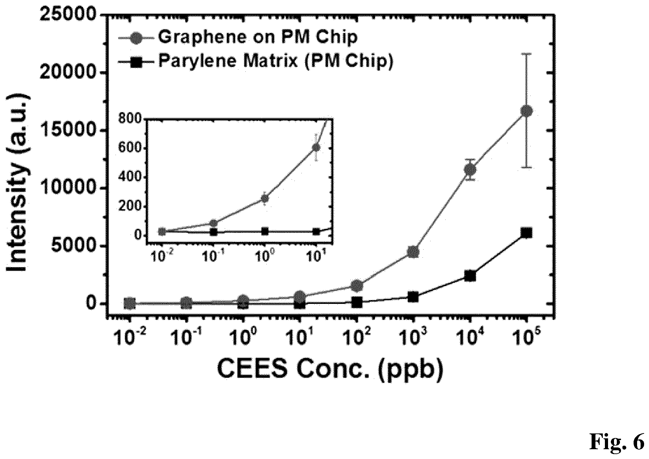

Fig. 6 shows results of mass spectrometry at each concentration when mixtures of CEED (2-chloroethylethysulfide) of various concentrations and graphene are formed on the parylene thin film on the sample plate having the organic matrix and parylene thin film formed thereon. As shown in Fig. 6, when CEED is mixed with graphene, CEED is better detected, as compared to a case not part of the claimed invention where CEED is not mixed with graphene.

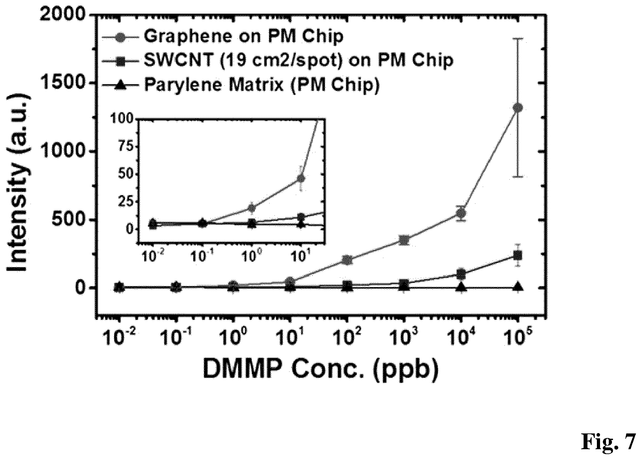

Also, Fig. 7 shows results of mass spectrometry at each concentration when mixtures of DMMP of various concentrations and graphene or CNT are formed on the parylene thin film on the sample plate having the organic matrix and parylene thin film formed thereon, whereof mixtures of DMMP and CNT are not part of the claimed invention. As shown in Fig. 7, when DMMP is not mixed with graphene or CNT, DMMP is little detected irrespective of the concentrations of DMMP. However, when DMMP is mixed with graphene, DMMP of 1 to 10 ppb is detected. Also, when DMMP is mixed with CNT, DMMP of 10 to 100 ppb is detected.

As described above, when using the sample plate of the related art in which the organic matrix and the compound, which is an analysis target, are mixed and formed on the sample plate, the organic matrix assists the ionization of the compound. Therefore, when the laser is illuminated, the compound is easily ionized, so that it is possible to increase an amount of the compound ions to collide with the detector and to analyze the mass of the compound. However, in this case, when the laser is illuminated, the organic matrix is also ionized, so that the ions thereof collide with the detector and are detected by the detector. Therefore, when the molecular weights of the compound to be analyzed and the organic matrix are similar to each other, it is not possible to correctly perceive the analysis target. Also, in case of a high-volatile material, when the sample is dropped on the sample plate, the sample volatilizes before the laser is illuminated. Therefore, it is not possible to ionize the sample.

However, when the laser is illuminated to the sample plate according to the preferred illustrative embodiment of the present invention, the compound, which is an analysis target, is ionized at a similar level to the case where the organic matrix and the compound are mixed. However, the organic matrix does not reach the detector through the parylene thin film and the ions colliding with the detector are the ions of the analysis target. Therefore, it is possible to correctly perceive a type of the compound, which is an analysis target. Also, since the graphene prevents the sample from being evaporated into the air, it is possible to perform the mass spectrometry even for the high-volatile sample by using the MALDI-TOF mass spectrometer.

Although the sample plate for a MALDI-TOF mass spectrometer, the method of manufacturing the sample plate and the mass spectrometry method using the sample plate according to the preferred illustrative embodiment of the present invention have been described with reference to the various examples, it should be noted that the illustrative embodiment can be variously changed and modified by one skilled in the art. Therefore, the scope of the present invention is limited only by the claims to be described below.

## Claims

1. A sample plate for mass spectrometry, the sample plate including:
a target plate,
an organic matrix formed on one surface of the target plate,
a parylene thin film formed on the target plate having the organic matrix formed thereon and formed to cover the entire organic matrix, the parylene
thin film being formed to have a thickness of 10 nm to 100 nm, and **characterized by**
a sample fixing layer formed on the parylene thin film, wherein
the sample fixing layer is made of graphene which is different from carbon nano tube (CNT) and does not constitute CNT.

2. A sample plate for mass spectrometry, the sample plate including:
a target plate,
an organic matrix formed on one surface of the target plate,
a parylene thin film formed on the target plate having the organic matrix formed thereon and formed to cover the entire organic matrix, the parylene
thin film being formed to have a thickness of 10 nm to 100 nm, and **characterized by**
a sample fixing layer formed on the parylene thin film, wherein
the sample fixing layer is made of a mixture of graphene with a sample,
which is an analysis target, wherein the graphene is different from carbon nano tube (CNT) and does not constitute CNT.

3. The sample plate of claim 1, wherein the sample plate further includes a sample, which is an analysis target, formed on the sample fixing layer.

4. The sample plate of claims 1 or 2, wherein the parylene thin film is a parylene-N thin film.

5. The sample plate of claims 1 or 2, wherein the sample plate is a sample plate for a Matrix Assisted Laser Desorption Ionization Time of Flight (MALDI-TOF) mass spectrometer.

6. A method of manufacturing a sample plate for mass spectrometry, the method including the steps of:
forming an organic matrix on one surface of a target plate,
forming a parylene thin film on the target plate having the organic matrix formed thereon so that it covers the entire organic matrix, the parylene thin
film being formed to have a thickness of 10 nm to 100 nm, and **characterized by**
forming a sample fixing layer on the parylene thin film, wherein
the sample fixing layer is made of graphene which is different from carbon nano tube (CNT) and does not constitute CNT.

7. A method of manufacturing a sample plate for mass spectrometry, the method including the steps of:
forming an organic matrix on one surface of a target plate,
forming a parylene thin film on the target plate having the organic matrix formed thereon so that it covers the entire organic matrix, the parylene thin
film being formed to have a thickness of 10 nm to 100 nm, and **characterized by**
mixing a sample, which is an analysis target, with graphene which is different from carbon nano tube (CNT) and does not constitute CNT;
forming a sample fixing layer made of the mixture of sample with graphene on the parylene thin film.

8. The method of claim 6, wherein the method further includes a step of forming a sample, which is an analysis target, on the sample fixing layer.

9. The method of claims 6 or 7, wherein the parylene thin film is a parylene-N thin film.

10. The method of claims 6 or 7, wherein the step of forming the parylene thin film includes
a first step of evaporating parylene dimer,
a second step of thermally decomposing the evaporated parylene dimer to form an intermediate product, and
a third step of introducing the intermediate product into a vapor deposition chamber and forming the parylene thin film on the target plate having the organic matrix formed thereon.

11. The method of claims 6 or 7, wherein the sample plate is a sample plate for a MALDI-TOF mass spectrometer.

12. A mass spectrometry method using a Matrix Assisted Laser Desorption Ionization Time of Flight (MALDI-TOF) mass spectrometer, the method including the steps of:
providing a sample plate including
a target plate,
an organic matrix formed on one surface of the target plate,
a parylene thin film formed on the target plate having the organic matrix formed thereon and formed to cover the entire organic matrix, the parylene thin film having a thickness of 10 nm to 100 nm, and a sample fixing layer formed on the parylene thin film, the sample fixing layer being made of graphene which is different from carbon nano tube (CNT) and does not constitute CNT;
forming a sample, which is an analysis target, on the sample fixing layer;
positioning the sample plate having the sample mounted thereon at a predetermined position of the MALDI-TOF mass spectrometer;
illuminating a laser to the sample plate to desorb and ionize the sample, and
performing mass spectrometry for the ionized sample.

13. A mass spectrometry method using a Matrix Assisted Laser Desorption Ionization Time of Flight (MALDI-TOF) mass spectrometer, the method including the steps of:
providing a sample plate including
a target plate,
an organic matrix formed on one surface of the target plate, and
a parylene thin film formed on the target plate having the organic matrix formed thereon and formed to cover the entire organic matrix, the parylene thin film having a thickness of 10 nm to 100 nm;
mixing a sample, which is an analysis target, with graphene which is different from carbon nano tube (CNT) and does not constitute CNT;
forming a sample fixing layer made of the mixture of sample with graphene on the parylene thin film;
positioning the sample plate having the sample mounted thereon at a predetermined position of the MALDI-TOF mass spectrometer;
illuminating a laser to the sample plate to desorb and ionize the sample, and
performing mass spectrometry for the ionized sample.

## Patentansprüche

1. Eine Probenplatte für die Massenspektrometrie, wobei die Probenplatte aufweist:
eine Zielplatte,
eine organische Matrix, die auf einer Oberfläche der Zielplatte ausgebildet ist,
einen Parylen-Dünnfilm, der auf der Zielplatte mit der organischen Matrix darauf ausgebildet ist und so ausgebildet ist, dass er die gesamte organische Matrix bedeckt, wobei der Parylen-Dünnfilm so ausgebildet ist, dass er eine
Dicke von 10 nm bis 100 nm aufweist, und **gekennzeichnet durch**
eine Probenfixierschicht, die auf dem Parylen-Dünnfilm ausgebildet ist, wobei die Probenfixierschicht aus Graphen hergestellt ist, das sich von Kohlenstoff-Nanoröhre (CNT) unterscheidet und keine CNT bildet.

2. Eine Probenplatte für die Massenspektrometrie, wobei die Probenplatte aufweist:
eine Zielplatte,
eine organische Matrix, die auf einer Oberfläche der Zielplatte ausgebildet ist,
einen Parylen-Dünnfilm, der auf der Zielplatte mit der organischen Matrix darauf ausgebildet ist und so ausgebildet ist, dass er die gesamte organische Matrix bedeckt, wobei der Parylen-Dünnfilm so ausgebildet ist, dass er eine
Dicke von 10 nm bis 100 nm aufweist, und
**gekennzeichnet durch**
eine Probenfixierschicht, die auf dem Parylen-Dünnfilm ausgebildet ist, wobei die Probenfixierschicht aus einem Gemisch von Graphen mit einer Probe hergestellt ist, die ein Analyse-Target ist, wobei sich das Graphen von Kohlenstoff-Nanoröhre (CNT) unterscheidet und keine CNT bildet.

3. Die Probenplatte nach Anspruch 1, wobei die Probenplatte weiterhin eine Probe aufweist, die ein Analyse-Target ist, das auf der Probenfixierschicht ausgebildet ist.

4. Die Probenplatte nach Anspruch 1 oder 2, wobei der Parylen-Dünnfilm ein Parylen-N-Dünnfilm ist.

5. Die Probenplatte nach Anspruch 1 oder 2, wobei die Probenplatte eine Probenplatte für ein Matrix Assisted Laser Desorption lonization Time of Flight-(MALDI-TOF)-Massenspektrometer ist.

6. Verfahren zur Herstellung einer Probenplatte für die Massenspektrometrie, wobei das Verfahren die folgenden Schritte umfasst:
Bilden einer organischen Matrix auf einer Oberfläche einer Zielplatte,
Bilden eines Parylen-Dünnfilms auf der Zielplatte mit der organischen Matrix darauf, so dass er die gesamte organische Matrix bedeckt, wobei der Parylen-Dünnfilm so ausgebildet ist, dass er eine Dicke von 10 nm bis 100 nm
aufweist, und
**gekennzeichnet durch**
Ausbilden einer Probenfixierschicht auf dem Parylen-Dünnfilm, wobei die Probenfixierschicht aus Graphen hergestellt ist, das sich von Kohlenstoff-Nanoröhre (CNT) unterscheidet und keine CNT bildet.

7. Verfahren zur Herstellung einer Probenplatte für die Massenspektrometrie, wobei das Verfahren die folgenden Schritte umfasst:
Bilden einer organischen Matrix auf einer Oberfläche einer Zielplatte,
Bilden eines Parylen-Dünnfilms auf der Zielplatte mit der organischen Matrix darauf, so dass er die gesamte organische Matrix bedeckt, wobei der Parylen-Dünnfilm so ausgebildet ist, dass er eine Dicke von 10 nm bis 100 nm
aufweist, und
**gekennzeichnet durch**
Mischen einer Probe, die ein Analyse-Target ist, mit Graphen, das sich von Kohlenstoff-Nanoröhre (CNT) unterscheidet und keine CNT bildet,
Bilden einer Probenfixierschicht, die aus der Mischung der Probe mit Graphen hergestellt ist, auf der Parylen-Dünnschicht.

8. Verfahren nach Anspruch 6, wobei das Verfahren ferner einen Schritt des Bildens einer Probe aufweist, die ein Analyse-Target ist, auf der Probenfixierschicht.

9. Verfahren nach Anspruch 6 oder 7, wobei der Parylen-Dünnfilm ein Parylen-N-Dünnfilm ist.

10. Verfahren nach Anspruch 6 oder 7, wobei der Schritt des Bildens des Parylen-Dünnfilms umfasst:
einen ersten Schritt des Verdampfens von Parylendimer,
einen zweiten Schritt des thermischen Zersetzens des verdampften Parylendimers, um ein Zwischenprodukt zu bilden, und
einen dritten Schritt des Einführens des Zwischenprodukts in eine Aufdampfkammer und Bilden des Parylen-Dünnfilms auf der Zielplatte mit der darauf gebildeten organischen Matrix.

11. Verfahren nach Anspruch 6 oder 7, wobei die Probenplatte eine Probenplatte für ein MALDI-TOF-Massenspektrometer ist.

12. Massenspektrometrieverfahren unter Verwendung eines Matrix Assisted Laser Desorption lonization Time of Flight-(MALDI-TOF)-Massenspektrometers, wobei das Verfahren die folgenden Schritte umfasst:
Bereitstellen einer Probenplatte mit
einer Zielplatte,
einer organischen Matrix, die auf einer Oberfläche der Zielplatte ausgebildet ist,
einem Parylen-Dünnfilm, der auf der Zielplatte mit der organischen Matrix darauf ausgebildet ist und so ausgebildet ist, dass er die gesamte organische Matrix bedeckt, wobei der Parylen-Dünnfilm eine Dicke von 10 nm bis 100 nm aufweist, und
einer Probenfixierschicht, die auf dem Parylen-Dünnfilm ausgebildet ist, wobei die Probenfixierschicht aus Graphen hergestellt ist, das sich von Kohlenstoff-Nanoröhre (CNT) unterscheidet und keine CNT bildet,
Ausbilden einer Probe, die ein Analyse-Target ist, auf der Probenfixierschicht,
Positionieren der Probenplatte mit der darauf befestigten Probe an einer vorbestimmten Position des MALDI-TOF-Massenspektrometers,
Beleuchten der Probenplatte mit einem Laser zum Desorbieren und Ionisieren der Probe und
Durchführen einer Massenspektrometrie für die ionisierte Probe.

13. Massenspektrometrieverfahren, die ein Matrix Assisted Laser Desorption lonization Time of Flight-(MALDI-TOF)-Massenspektrometers, wobei das Verfahren die folgenden Schritte umfasst:
Bereitstellen einer Probenplatte mit
einer Zielplatte,
einer organischen Matrix, die auf einer Oberfläche der Zielplatte ausgebildet ist, und
einem Parylen-Dünnfilm, der auf der Zielplatte mit der organischen Matrix darauf ausgebildet ist und so ausgebildet ist, dass er die gesamte organische Matrix bedeckt, wobei der Parylen-Dünnfilm eine Dicke von 10 nm bis 100 nm aufweist,
Mischen einer Probe, die ein Analyse-Target ist, mit Graphen, das sich von Kohlenstoff-Nanoröhre (CNT) unterscheidet und keine CNT bildet,
Bilden einer Probenfixierschicht aus der Mischung der Probe mit Graphen auf dem Parylen-Dünnfilm,
Positionieren der Probenplatte mit der darauf befestigten Probe an einer vorbestimmten Position des MALDI-TOF-Massenspektrometers,
Beleuchten der Probenplatte mit einem Laser zum Desorbieren und Ionisieren der Probe und
Durchführen einer Massenspektrometrie für die ionisierte Probe.

## Revendications

1. Plaque d'échantillon pour spectrométrie de masse, la plaque d'échantillon comprenant :
une plaque cible,
une matrice organique formée sur une surface de la plaque cible,
un film mince de parylène formé sur la plaque cible comportant la matrice organique formée sur celle-ci et formé de façon à recouvrir la matrice organique entière, le film
mince de parylène étant formé de façon à avoir une épaisseur de 10 nm à 100 nm, et **caractérisé par**
une couche de fixation d'échantillon formée sur le film mince de parylène, dans laquelle la couche de fixation d'échantillon est constituée de graphène qui est différent d'un nanotube de carbone (CNT) et ne constitue pas un CNT.

2. Plaque d'échantillon pour spectrométrie de masse, la plaque d'échantillon comprenant :
une plaque cible,
une matrice organique formée sur une surface de la plaque cible,
un film mince de parylène formé sur la plaque cible comportant la matrice organique formée sur celle-ci et formé de façon à recouvrir la matrice organique entière, le film
mince de parylène étant formé de façon à avoir une épaisseur de 10 nm à 100 nm, et **caractérisé par**
une couche de fixation d'échantillon formée sur le film mince de parylène, dans laquelle la couche de fixation d'échantillon est constituée d'un mélange de graphène avec un échantillon, qui est une cible d'analyse, dans laquelle le graphène est différent d'un nanotube de carbone (CNT) et ne constitue pas un CNT.

3. Plaque d'échantillon selon la revendication 1, où la plaque d'échantillon comprend en outre un échantillon, qui est une cible d'analyse, formé sur la couche de fixation d'échantillon.

4. Plaque d'échantillon selon les revendications 1 ou 2, dans laquelle le film mince de parylène est un film mince de parylène N.

5. Plaque d'échantillon selon les revendications 1 ou 2, où la plaque d'échantillon est une plaque d'échantillon pour un spectromètre de masse à ionisation/désorption laser assistée par matrice-temps de vol (MALDI-TOF).

6. Procédé de fabrication d'une plaque d'échantillon pour spectrométrie de masse, le procédé comprenant les étapes de :
formation d'une matrice organique sur une surface d'une plaque cible,
formation d'un film mince de parylène sur la plaque cible comportant la matrice organique formée sur celle-ci de sorte qu'il recouvre la matrice organique entière, le film
mince de parylène étant formé de façon à avoir une épaisseur de 10 nm à 100 nm, et **caractérisé par**
la formation d'une couche de fixation d'échantillon sur le film mince de parylène, dans lequel
la couche de fixation d'échantillon est constituée de graphène qui est différent d'un nanotube de carbone (CNT) et ne constitue pas un CNT.

7. Procédé de fabrication d'une plaque d'échantillon pour spectrométrie de masse, le procédé comprenant les étapes de :
formation d'une matrice organique sur une surface d'une plaque cible,
formation d'un film mince de parylène sur la plaque cible comportant la matrice organique formée sur celle-ci de sorte qu'il recouvre la matrice organique entière, le film
mince de parylène étant formé de façon à avoir une épaisseur de 10 nm à 100 nm, et **caractérisé par**
le mélange d'un échantillon, qui est une cible d'analyse, avec un graphène qui est différent d'un nanotube de carbone (CNT) et ne constitue pas un CNT ;
la formation d'une couche de fixation d'échantillon constituée du mélange d'échantillon avec un graphène sur le film mince de parylène.

8. Procédé selon la revendication 6, où le procédé comprend en outre une étape de formation d'un échantillon, qui est une cible d'analyse, sur la couche de fixation d'échantillon.

9. Procédé selon les revendications 6 ou 7, dans lequel le film mince de parylène est un film mince de parylène N.

10. Procédé selon les revendications 6 ou 7, dans lequel l'étape de formation du film mince de parylène comprend
une première étape d'évaporation du dimère de parylène,
une deuxième étape de décomposition thermique du dimère de parylène évaporé pour former un produit intermédiaire, et
une troisième étape d'introduction du produit intermédiaire dans une chambre de dépôt en phase vapeur et de formation du film mince de parylène sur la plaque cible comportant la matrice organique formée sur celle-ci.

11. Procédé selon les revendications 6 ou 7, dans lequel la plaque d'échantillon est une plaque d'échantillon pour un spectromètre de masse MALDI-TOF.

12. Procédé de spectrométrie de masse utilisant un spectromètre de masse à ionisation/désorption laser assistée par matrice-temps de vol (MALDI-TOF), le procédé comprenant les étapes de :
fourniture d'une plaque d'échantillon comprenant
une plaque cible,
une matrice organique formée sur une surface de la plaque cible,
un film mince de parylène formé sur la plaque cible comportant la matrice organique formée sur celle-ci et formé de façon à recouvrir la matrice organique entière, le film mince de parylène ayant une épaisseur de 10 nm à 100 nm, et une couche de fixation d'échantillon formée sur le film mince de parylène, la couche de fixation d'échantillon étant constituée de graphène qui est différent d'un nanotube
de carbone (CNT) et ne constitue pas un CNT ;
formation d'un échantillon, qui est une cible d'analyse, sur la couche de fixation d'échantillon ;
positionnement de la plaque d'échantillon comportant l'échantillon monté sur celle-ci à une position prédéterminée du spectromètre de masse MALDI-TOF ;
irradiation d'un laser sur la plaque d'échantillon pour désorber et ioniser l'échantillon, et
conduite d'une spectrométrie de masse pour l'échantillon ionisé.

13. Procédé de spectrométrie de masse utilisant un spectromètre de masse à ionisation/désorption laser assistée par matrice-temps de vol (MALDI-TOF), le procédé comprenant les étapes de :
fourniture d'une plaque d'échantillon comprenant
une plaque cible,
une matrice organique formée sur une surface de la plaque cible, et
un film mince de parylène formé sur la plaque cible comportant la matrice organique formée sur celle-ci et formé de façon à recouvrir la matrice organique
entière, le film mince de parylène ayant une épaisseur de 10 nm à 100 nm ;
mélange d'un échantillon, qui est une cible d'analyse, avec un graphène qui est différent d'un nanotube de carbone (CNT) et ne constitue pas un CNT ;
formation d'une couche de fixation d'échantillon constituée du mélange d'échantillon avec un graphène sur le film mince de parylène ;
positionnement de la plaque d'échantillon comportant l'échantillon monté sur celle-ci à une position prédéterminée du spectromètre de masse MALDI-TOF ;
irradiation d'un laser sur la plaque d'échantillon pour désorber et ioniser l'échantillon, et
conduite d'une spectrométrie de masse pour l'échantillon ionisé.
